# EUROPEAN PATENT SPECIFICATION

(11) **EP 4 771 107 B1**
(45) Date of publication and mention of the grant of the patent: **14.10.2026**
(21) Application number: 25705073.2
(22) Date of filing: 13.01.2025
(51) Int. Cl.: C09D 11/106, C09D 11/033, C09D 11/037

(54) **OPAQUE WHITE OXYGEN BARRIER INK**
OPAKE WEISSE SAUERSTOFFBARRIERETINTE
ENCRE BLANCHE OPAQUE BARRIÈRE À L'OXYGÈNE

(30) Priority: 15.01.2024 US 202463620981 P
(43) Date of publication of application: 08.07.2026
(73) Proprietor: Sun Chemical Corporation, Parsippany, NJ 07054 (US)
(72) Inventor: SCHOTTLAND, Philippe, Carlstadt, New Jersey 07072 (US); FRINAULT, Thierry, Rochdale OL16 4LE GB (GB); MACDONALD, Andrew, Rochdale OL16 4LE GB (GB)
(74) Representative: Carpmaels & Ransford LLP
(86) International application number: PCT/US2025/011387
(87) International publication number: WO 2025/155500

(56) References cited:
- EP-A1- 1 894 971
- WO-A1-03/031720
- JP-A- 2002 047 443
- US-A1- 2006 135 676

## Description

### FIELD OF THE INVENTION

The present invention is related to the field of inks and coatings. In particular, the present application is related to oxygen barrier inks and coatings. Oxygen barrier inks and coatings comprising a polyvinyl alcohol, silica, and white pigment, such as titanium dioxide, are disclosed herein.

### BACKGROUND OF THE INVENTION

Food and other sensitive products are often printed on flexible substrates, which are usually transparent. These flexible substrates are used for packaging of sensitive products, such as food, cosmetics, and pharmaceuticals. Process or custom color inks are used to print designs and information on the flexible substrates. Owing to the transparent nature of process color inks, opaque white inks are typically used as a backing to enhance the visibility and color of the process inks. The opaque white inks may be printed as the first layer directly on the substrate (first down printed layer), and the process color inks printed on top of the opaque white ink. Alternatively, in a reverse printing process, the process color inks can be printed first, and the opaque white ink printed last on top of the process inks (last down layer).

Opaque white inks contain a high level of white pigment, such as titanium dioxide, allowing them to reflect light back to the viewer and making the overlying colors stand out. In reverse printed flexible packaging structures, inks are typically applied in-line in a sequence starting with the process color, or custom color, inks, followed by a white backing ink, which may be deposited using one or more print stations. Generally a flexographic or gravure printing press is used.

Having the white ink applied in the last station(s) has some advantages on a central impression (CI) flexographic press because it is the last station before the drying tunnel, and therefore the print station which offers the best drying capability, because the previous CI stations would only have a very short inter-station drying.

Oxygen barrier coatings are typically very thin coating layers, thus making it a challenge to apply over a white backing ink, which is generally a rather porous layer with substantial roughness compared to the film substrate. This is why prior art oxygen barrier coatings are preferably applied as a primer layer between the substrate and the inks. However, the disadvantage of that approach in the case of CI flexographic printing is that there is limited drying capacity inter-stations. Although it is possible to apply an oxygen barrier coating over a backing white ink, the oxygen barrier performance achieved is generally not as good as when the same coating is applied as a primer (assuming the press runs at a speed where that coating can be fully dried).

Reverse printed flexible film structures are often used for food packaging and are therefore required to provide a suitable barrier to gases such as oxygen to protect the contents of the package from oxidation, thereby extending the shelf life of the product. Alternatively, the gas barrier may be needed to maintain a modified atmosphere inside the package (e.g., CO₂ or N₂). In structures where the films themselves provide only some or no significant gas barrier, extra coating layers are required in addition to the inks.

Siegwerk Druckfarben and Henkel recently filed an application for an alternative approach (see WO 2023/285183A1) which uses a matched combination of inks (including white backing ink) with improved surface smoothness that can be overprinted with an oxygen barrier while retaining strong barrier performance. Although this approach could achieve good barrier performance at higher printing speed, it requires the use of an extra print station for the barrier coating, which is not always available.

Channa and colleagues disclose coatings with the purpose of preventing photodegradation and oxidation of food products. The coatings comprise polyvinyl alcohol and zinc oxide nanoparticles. Coating containing only polyvinyl alcohol had good oxygen barrier properties. However, the oxygen barrier properties were deteriorated, with oxygen permeability increasing with increasing concentrations of zinc oxide nanoparticles (Channa, et al. (2022), UV blocking and oxygen barrier coatings used on polyvinyl alcohol and zinc oxide nanoparticles for packaging applications, *Coatings* **12**:897).

EP 2 832 537 discloses a gas barrier film with low haze value and excellent transparency. The gas barrier coating comprises a polyvinyl alcohol and a silicon compound.

JP 2004-074448 discloses a biaxially-stretched polypropylene resin film having a polyvinyl alcohol resin layer as an oxygen barrier layer. The polyvinyl alcohol (PVOH) resin layer comprises a mixture of PVOH and amorphous silica particles. The mixing weight ratio of the PVOH/silica particles is preferably 95.0/5.0 to 95.5/0.5.

US 2017/0145228 discloses gas barrier coatings comprising colloidal silica having a specific surface area greater than 300 m²/g; and PVOH and/or EVOH and/or a silylated derivative thereof. There is no disclosure of the use of white pigment, or any other color pigment, in the coating.
US 2006/135676 A1 relates to "a barrier composition comprising a dispersion, emulsion or solution of a polymer, starch or starch derivative; colloidal silica particles and a curing agent capable of cross-linking said polymer, starch or starch derivative and coupling said silica particles thereto [and] a barrier layer obtainable from said barrier composition and a method of providing such composition and layer [and] a laminated packaging material comprising a substrate layer and a barrier layer formed from a barrier composition on at least one side of the substrate layer [and] the use thereof, *inter alia,* to provide a packaging container, a barrier film etc.".
WO 03/031720 A1 relates to "a laminated packaging material comprising a core layer and a barrier layer formed from a liqueform composition comprising a dispersion or solution of a polymer, starch or starch derivative on one side of the core layer, the barrier layer also including particles of amorphous SiO₂ [wherein] said particles of amorphous SiO₂ in colloidal particle size in said barrier layer are present in a content of above 40 weight % but below 80 weight %", as well as "a packaging container which has been produced from the packaging material, as well as a method of producing the packaging material".
JP 2002 047443 A relates to "[a] gas-barrier coating composition contain[ing] (a) a polyvinyl alcohol resin and (b) at least one compound selected from the group consisting of metal compounds represented by the formula: R¹ₘM(OR²)ₙ (wherein M is a metal atom; R¹'s may be the same or different and are each a C₁₋₈ organic group; R²'s may be the same or different and are each a C₁₋₅ alkyl, a C₁₋₆ acyl, or phenyl; and (m) and (n) are each an integer of 0 or greater, provided that m+n is the valence of M), hydrolyzates of the metal compounds and condensates of the metal compounds, [having] a thermal gelation rate of 1-90%".
EP 1894971 A1 relates to "a composition having gas-barrier properties, which can produce a resin film having gas-barrier properties under high humidity conditions and high abrasion resistance, and a coating film formed by thermally treating a film-like product of the composition having gas-barrier properties and a method for producing the same".

### BRIEF SUMMARY OF THE INVENTION

The present application discloses an opaque white ink that can be run in-line on a flexographic or rotogravure press, where the opaque white ink imparts excellent oxygen barrier properties to the structure, in addition to opacity, allowing the converter to print fewer layers and thereby simplify the structure.

In a particular aspect, the present invention provides an opaque water-based printing ink or coating composition comprising:
(a) 5 wt% to 20 wt% solid polyvinyl alcohol, based on the total weight of the composition;
(b) 10 wt% to 50 wt% colloidal silica dispersion, based on the total weight of the composition, wherein the colloidal silica dispersion is acidic, with a pH range of 3 to 6;
(c) 5 wt% to 25 wt% ethanol, based on the total weight of the composition; and
(d) 5 wt% to 35 wt% deionized water, based on the total weight of the composition.

In certain embodiments, the composition is a white ink, comprising 10 wt% to 50 wt% titanium dioxide (TiO₂).

In some embodiments, the composition further comprises one or more of additional colorants, and/or adhesion promoters.

In certain embodiments, the composition is ≥ 90% biodegradable.

In some embodiments, the composition preferably has an oxygen transmission rate (OTR) of less than or equal to 100 cm³/m²/24h at 23 °C and 50% relative humidity (RH). More preferably, the composition provides an OTR of less than or equal to 50 cm³/m²/24h at 23 °C and 50% RH; or less than or equal to 25 cm³/m²/24h at 23 °C and 50% RH; and most preferably less than or equal to 15 cm³/m²/24h at 23 °C and 50% RH.

In another aspect, the present application provides a method of providing a printed structure having an oxygen barrier layer, comprising:
(a) Applying one or more layers of the opaque water-based printing composition to a substrate as one or more oxygen barrier layers;
(b) Drying the one or more layers on the substrate; and
(c) Optionally applying and drying one or more additional ink layers;

thereby obtaining a printed structure having an oxygen barrier layer;
wherein the printed structure having an oxygen barrier layer has an oxygen transmission rate of less than 100 cm³/m²/24h at 23°C and 50% relative humidity.

These and other objects, advantages, and features of the invention will become apparent to those persons skilled in the art upon reading the details of the formulations and methods as more fully described below.

### DETAILED DESCRIPTION OF THE INVENTION

There has been a growing movement towards more environmentally friendly packaging in recent years as consumers become aware of the impact of plastic waste on natural environments. Until recently, converters have combined plastic films in multi-material laminates to utilize different properties such as stiffness, elasticity, and barrier to gases. Such combinations of materials are very difficult to recycle as they do not easily separate and are therefore likely to contribute to landfill.

To improve the recyclability of plastic structures, converters are increasingly looking to produce laminates of chemically similar materials such as Biaxially Oriented Poly Propylene (BOPP) laminated to Cast Poly Propylene (CPP), or Mono-Directional Oriented Polyethylene (MDOPE) laminated to Polyethylene (PE). These simpler structures however do not have the same level of barrier to gases as would a multi-material laminate containing, for example, polyethylene terephthalate (PET). To improve the barrier properties, converters must consider the application of a suitable coating layer of Polyvinylidene Chloride (PVDC), Ethylene-vinyl alcohol (EVOH), Polyvinyl Alcohol (PVOH) or the deposition of a metal oxide such as Aluminum Oxide (AlOx) or Silicon Oxide (SiOx). Vacuum metallization of one of the films in the structure can also be used for high barrier applications, but each of these options adds cost to the packaging and in some cases may also affect recyclability.

The present invention provides opaque water-based printing ink and coating composition. The compositions reduce oxygen permeability, and are suitable as oxygen barrier coatings on substrates used in sensitive applications, such as food and drug packaging, cosmetics, etc. The compositions comprise polyvinyl alcohol and colloidal silica. The compositions may colored. For example, the compositions may be opaque water-based white printing inks and coatings, and contain one or more white pigments (e.g. TiO₂ or ZnO). The combination of polyvinyl alcohol (PVOH) with colloidal silica and titanium dioxide pigment was surprisingly found to give low oxygen transmission rates (OTR) when printed on a polyolefin film. Whilst the addition of colloidal silica to PVOH has previously (US 9,982,148 B2) been shown to improve the OTR of the PVOH, this was for a clear coating. Titanium dioxide is typically used to create opaque white inks, but these typically have no inherent barrier properties.

The white barrier inks of the present invention combine a PVOH resin or a modified PVOH resin having good alcohol tolerance with a dispersion of colloidal silica and white pigment (such as titanium dioxide). The inks can be applied in-line or off-line via flexographic or gravure printing in one or more layers to create an opaque white backing layer which imparts strong oxygen barrier properties compared to structures using a traditional white ink.

It is to be understood that the foregoing general description and the following detailed description are exemplary and explanatory only, and are not restrictive of any subject matter claimed.

Headings are used solely for organizational purposes, and are not intended to limit the invention in any way.

Unless otherwise defined, all technical and scientific terms used herein have the same meaning as is commonly understood by one of skill in the art to which the inventions belong. Although any methods and materials similar or equivalent to those described herein can be used in the practice or testing of the present invention, the preferred methods are described.

### Definitions

In this application, the use of the singular includes the plural unless specifically stated otherwise. As used herein, the singular forms "a," "an" and "the" are intended to include the plural forms as well, unless the context clearly indicates otherwise.

In this application, the use of "or" means "and/or" unless stated otherwise. Also, when it is clear from the context in which it is used, "and" may be interpreted as "or," such as in a list of alternatives where it is not possible for all to be true or present at once.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."

When the terms "consist of", "consists of" or "consisting of" is used in the body of a claim, the claim term set off with "consist of", "consists of" and/or "consisting of" is limited to the elements recited immediately following "consist of", "consists of" and/or "consisting of", and is closed to unrecited elements related to that particular claim term. The term 'combinations thereof', when included in the listing of the recited elements that follow "consist of", "consists of" and/or "consisting of" means a combination of only two or more of the elements recited.

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended.

It is to be understood that wherein a numerical range is recited, it includes the end points, all values within that range, and all narrower ranges within that range, whether specifically recited or not.

Throughout this disclosure, all parts and percentages are by weight (wt% or mass% based on the total weight) and all temperatures are in °C unless otherwise indicated.

As used herein, "substrate" means any surface or object to which an ink or coating can be applied. Substrates include, but are not limited to, cellulose-based substrates, paper, paperboard, fabric (e.g. cotton), leather, textiles, felt, concrete, masonry, stone, plastic, plastic or polymer film, spunbond non-woven fabrics (e.g. consisting of polypropylene, polyester, and the like) glass, ceramic, metal, wood, composites, combinations thereof, and the like. Substrates may have one or more layers of metals or metal oxides, or other inorganic materials. Particularly preferred are polymeric substrates.

As used herein, the term "article" or "articles" means a substrate or product of manufacture. Examples of articles include, but are not limited to: substrates such as cellulose-based substrates, paper, paperboard, plastic, plastic or polymer film, glass, ceramic, metal, composites, and the like; and products of manufacture such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.

As used herein, "inks and coatings," "inks," and "coatings" are used interchangeably, and refer to compositions of the invention, or, when specified, compositions found in the prior art (comparative). Inks and coatings typically contain resins, solvent, and, optionally, colorants.

As used herein, "biodegradable" means that the material can be consumed by microorganisms. Biodegradability can be defined as (of a substance or object) capable of being decomposed by bacteria or other living organisms and thereby avoiding pollution. Biodegradability shows quantitatively the inherent nature of the material to be consumed by the microorganisms.

As used herein, "compostability" encompasses three factors: biodegradability, disintegration, and ecotoxicity. Biodegradability shows quantitatively the inherent nature of the material to be consumed by microorganisms. Biodegradability protects the environment by preventing the material from accumulating. Disintegration measures whether the material breaks down and falls apart, thereby protecting the compost plant operator. The material may or may not be biodegrading. Ecotoxicity testing determines whether the material shows any inhibition on plant growth, or the survival of soil or aquatic fauna, after composting. Ecotoxicity can be described as the measure of the impact of substances on living organisms in our ecosystems.

As used herein, "gas barrier" and "oxygen barrier" are both used. Although a main focus of the present application is to provide inks and coatings with oxygen barrier properties, it is understood that such inks and coatings would also have barrier properties for other gasses (e.g. CO₂ and N₂), as well as water vapor, odors, pollutants, etc.

As used herein, "first down layer" when referring to a printed ink or coating composition means that the composition is applied directly to the substrate.

As used herein, "last down layer" when referring to a printed ink or coating composition means that the composition is applied on top of previously printed layers, and no further layers are printed on top of it.

As used herein, "intermediate layer" or "intermediate layers" refers to ink or coating compositions printed after the first down layer, but before the last down layer.

A "backing white" is a reverse-printed white backing color applied as the last ink color printed on a design, covering all other colors.

### Opaque water-based printing inks and coatings

The opaque water-based printing ink and coating compositions disclosed herein comprise polyvinyl alcohol (PVOH) resin or a modified PVOH resin having good alcohol tolerance with an acidic colloidal silica dispersion, having a pH in the range of 3 to 6, such as 3 to 5. In certain embodiments, the opaque water-based printing inks and coatings are white printing inks and coatings. When prepared as white inks and coatings, the compositions comprise one or more white pigments (e.g. TiO₂ or ZnO).

The opaque water-based printing ink and coating compositions comprise a PVOH resin or a modified PVOH resin having good alcohol tolerance. Examples of suitable PVOH or PVOH modified resins include materials from Mitsubishi Chemical Group and Kuraray, or any other PVOH grades preferably with a saponification value of 98.5% and above. PVOH resins typically have a weight average molecular of 26,000 to 400,000 Daltons (Da).

The opaque water-based printing ink and coating compositions comprise PVOH in an amount of 5 wt% to 20 wt% PVOH resin solid, based on the total weight of the composition. For example, the compositions may contain 5 wt% to about 15 wt%, or about 10 wt% to 20 wt%, or any other value or narrower range within the ranges disclosed, including the endpoints.

Although PVOH is described herein, it is understood that other polymers with gas barrier properties could also be used in the compositions of the present application in addition to the PVOH. Such other polymers include, for example, but not limited to, starches, pullulan, proteins such as Xampla, polysaccharides, polyurethane dispersion, or polyamide.

The opaque water-based printing ink and coating compositions comprise colloidal silica dispersion. The colloidal silica dispersions are acidic (having a pH of 3 to 6). Examples of suitable colloidal silicas include those from W.R. Grace & Co. and Nouryon. Colloidal silica is provided as a dispersion of small particle silica in a solvent, such as, for example, water, an organic solvent, or a combination thereof.

The opaque water-based printing ink and coating composition disclosed herein comprise 10 wt% to 50 wt% colloidal dispersion, based on the total weight of the composition. For example, the compositions may comprise 10 wt% to about 35 wt% of colloidal dispersion, based on the total weight of the composition, or any other value or narrower range within the ranges disclosed, including the endpoints. The colloidal dispersions typically have a solids content of about 20% to about 50%. Therefore, the amount of silica particles present in the compositions is typically from about 2 wt% to about 25 wt%, based on the total weight of the composition.

In certain embodiments, the opaque water-based printing ink and coating compositions disclosed herein are white printing inks and coatings. White opaque water-based printing ink and coating compositions contain one or more white pigments. Examples of suitable white pigments include, but are not limited to, titanium dioxide (TiO₂), zinc oxide (ZnO), aluminum silicate (clay, kaolinite), calcium carbonate, mica, silica, and the like. Some white pigments can also be used as fillers. In certain embodiments, the white pigment is titanium dioxide.

The opaque water-based white ink and coating compositions disclosed herein typically comprise about 5 wt% to about 45 wt% white pigment, based on the total weight of the composition. For example, the compositions may comprise about 10 wt% to about 35 wt%, or about 15 wt% to about 30 wt% white pigment, based on the total weight of the composition, or any other value or narrower range within the ranges disclosed, including the endpoints.

Although the present application discloses oxygen barrier white inks, a similar approach could be taken to formulate colored inks other than white by replacing the white pigment with other colorants. For example, other colorants may include organic and inorganic pigments, pigment dispersions, or dyes. The colored inks would also have high color strength and/or opacity, along with strong oxygen barrier properties in the same layer. Suitable colorants include but are not limited to: organic or inorganic pigments and dyes. The dyes include but are not limited to fluorescent dyes, azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 174, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36; Pigment Blue Numbers 15, 15:3, 15:4; Pigment Violet Numbers 3, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired. The other colorants, when used, are typically used in an amount of about 5 wt% to about 45 wt%, based on the total weight of the composition, or any other value or narrower range within the ranges disclosed, including the endpoints.

As with most ink and coating compositions, additives may be incorporated to enhance various properties. A partial list of such additives includes, but is not limited to, adhesion promoters, silicones, light stabilizers, optical brighteners, de-gassing additives, ammonia, flow promoters, defoamers, antioxidants, stabilizers, surfactants, dispersants, plasticizers, rheological additives, waxes, etc. When included, additives are typically each individually present in the compositions is an amount of about 0.1 wt% to about 10 wt%, based on the total weight of the composition.

The barrier white inks disclosed herein have a liquid phase which contains preferably at least 20%, more preferably at least 35%, and most preferably at least 50% of organic solvent(s). The organic solvent(s) includes ethanol, and preferably short chain alcohols such as n-propanol or isopropanol. Currently commercially used PVOH based coatings applied as a barrier layer in filmic structures are usually applied offline due to their slow drying profiles, the water sensitive nature of the PVOH, and the need to apply them directly onto the film before any further inks and coatings are applied. In this way, the ink will have optimal drying, allowing it to be run in-line. Advantageously, the PVOH based coatings disclosed herein have faster drying profiles, and can be applied in-line.

Further modification of the formulations can be carried out to provide improved lamination bond strengths. Adhesion promoters such as zirconium propionate, zinc oxide and zirconium oxides can be used to improve the adhesion to the primary web and the lamination bond strengths in laminated structures.

The inks and coatings disclosed herein can be applied in-line or off-line via flexographic or gravure layers to create, for example, a white backing layer which imparts strong oxygen barrier properties, compared to structures using a traditional white ink.

In a preferred embodiment, the finished inks would have a non-volatile content (NVC%, also referred to as "solids content") of ≥15%, more preferably ≥20%, most preferably ≥25%.

In another preferred embodiment, the finished inks would have a viscosity of ≤ 300 mPa.s, more preferably ≤ 200 mPa.s.

In one embodiment, the present invention provides an opaque water-based printing ink or coating composition comprising:
(a) 5 wt% to 20 wt% solid polyvinyl alcohol, based on the total weight of the composition;
(b) 10 wt% to 50 wt% colloidal silica dispersion, based on the total weight of the composition, wherein the colloidal silica dispersion is acidic, with a pH range of 3 to 6;
(c) 5 wt% to 25 wt% ethanol, based on the total weight of the composition;
(d) 10 wt% to 50 wt% titanium dioxide, based on the total weight of the composition; and
(e) 5 wt% to 35 wt% deionized water, based on the total weight of the composition.

In a further embodiment the opaque white barrier compositions of the present application would be used as a backing white to allow delamination during recycling. In another embodiment, the opaque white barrier compositions of the present application would be used in combination with washable inks (for example Solvawash - Sun Chemical) to produce a structure where the pigmented layers could be completely removed during recycling and therefore yield more valuable clear recycled PE resin as opposed to mixed colors. White pigments also tend to be collected on melt filters during thermal recycling, so being able to remove them is an advantage.

Advantageously, the opaque white compositions of the present application are biodegradable as they are comprised of materials that are known to be ≥90% biodegradable. Inorganic materials don't count when you consider biodegradability / compostability but need to total 50% or less of a dry composition to pass certification. Thus, the white barrier coating compositions would pass ≥90% biodegradability in both home and industrial conditions which is a unique property compared to traditional white inks. Inks generally fall under exemption which means that they cannot account each (per color) for more than 1% of the structure and 5% total. That number is expected to drop to 3 or even 2.5% in the coming years. Having a certified white compostable ink which also imparts oxygen barrier would be highly advantageous for converters/ brand owners designing compostable structures.

### EXAMPLES

The present invention is further described by the following non-limiting examples, which further illustrate the invention, and are not intended to, nor should they be interpreted to, limit the scope of the invention.

### Methods

### Application of inks

Examples 1 to 4, and Comparative Example A (see Table 1A), were each printed onto 30-micron Bicor MB400 transparent untreated OPP film from Jindal using a No.1 K-bar. The inks of Table 2A , Examples 5 and 6, and comparative Example B and comparative example WBDEV529, were applied with a laboratory flexographic proofer to corona-treated MDOPE with a 6.8BCM anilox in one and two layers. Examples 7 and 7A inks were applied on corona-treated MDOPE at a dry weight of 6 g/m². Example 8 ink was applied on M400 transparent untreated OPP at a dry coating weight of 6 g/m².

### Viscosity

Viscosity of the different compositions/blends was assessed using a cone and plate on an AR 1500ex rheometer from TA instruments, at 23°C. Viscosity is reported as mPa.s. In another preferred embodiment, the finished inks would have a viscosity of ≤ 300 mPa.s, more preferably ≤ 200 mPa.s.

### Stability

Stability was visually assessed after the blends were stored for 48 hours. An unstable blend displayed obvious visual phase separation after standing for 48 hours with an opaque pigment-rich portion at the bottom of the container and a clear phase at the top. Stability was deemed as OK (acceptable) if no such phase separation was visible at the end of the test period or the phase separation could be eliminated with a brief mix.

### Tape adhesion

Adhesion was assessed using Tesa 1116 tape according to ASTM D3359. A passing result would be ≤10% ink removal by the tape.

### Fineness of grind

All of the comparative and inventive ink examples were high-speed mixed until a fineness of grind (FOG) of ≤ 10 µm was achieved as evaluated on a Hegman gauge, according to ASTM D1210-05(2022).

### Opacity

The opacity quoted is calculated from the transmission (%T) values achieved on a Byk Gardner Haze Gard Dual machine (Opacity = 100-%T) and relates to 2 layers of the Inventive Examples and a single layer of the reference white.

### Oxygen transmission rate (OTR)

Oxygen transmission rate (OTR) was measured according to ASTM D3985 using a Labthink C230H Oxygen Permeability Tester under temperate conditions of 23°C and 50% relative humidity (RH). In a preferred embodiment the OTR would be ≤100 cm³/m²/24h; more preferably ≤50 cm³/m²/24h; more preferably ≤25 cm³/m²/24h; most preferably ≤10 cm³/m²/24h.

### Non-volatile content (NVC%)

Non-volatile content (NVC%) was calculated according to ASTM D1353-13(2021). In a preferred embodiment, the finished inks and coatings would have a non-volatile content (NVC%, also referred to as "solids content") of ≥15%, more preferably ≥20%, most preferably ≥25%.

### Examples 1 to 4. White oxygen barrier inks.

Examples 1 to 4 are inventive white oxygen barrier inks prepared by combining a polyvinyl alcohol copolymer (PVOH) with dispersions of colloidal silica, and a Sun Chemical highly pigmented white base. Comparative Example A is a comparative white ink with a similar loading of pigment, WBDEV529: Aqualam White (Sun chemical). WBDEV529:Aqualam White (Sun Chemical) has a titanium dioxide pigment at around 30% solids dispersed in a styrene acrylic base. The formulations of Examples 1 to 4, and Comparative Example A, are shown in Table 1A.

**Table 1A. Formulation of white oxygen barrier inks**

| **Material** | **Comp. Ex. A** | **Ex. 1 (Ref.)** | **Ex. 2 (Inv.)** | **Ex. 3 (Ref.)** | **Ex. 4 (Inv.)** |
|---|---|---|---|---|---|
| ¹PVOH | WBDEV52 9: Aqualam White | 66.4 | 66.4 | 62.31 | 62.31 |
| ²Colloidal Silica Dispersion | | | 19.92 | | 18.69 |
| ³Colloidal Silica Dispersion | | 19.92 | | 18.69 | |
| Deionized water | | 6.64 | 6.64 | 9.35 | 9.35 |
| ⁶Wetting/Dispersing additive | | 0.33 | 0.33 | 0.25 | 0.25 |
| Silicone defoamer | | 0.07 | 0.07 | 0.06 | 0.06 |
| ⁴White Base | | 6.64 | 6.64 | 9.35 | 9.35 |
| Total | 100 | 100 | 100 | 100 | 100 |
| High speed mix to a FOG of <10 µm | | | | | |

| | | | | | |
|---|---|---|---|---|---|
| ¹20-25% solution of an amorphous water soluble, biodegradable, vinyl alcohol copolymer with low crystallinity and high hydrogen bond strength and excellent gas barrier properties ²Acidic, 40% aqueous dispersion of surface treated silica, coated with an aluminium compound ³Alkaline, 45% solids dispersion of amorphous silica ⁴WW04 Aquapack White Base - a commercially available aqueous dispersion of TiO₂ in acrylic resin from Sun Chemical ⁶Solution of an alkylolammonium salt of a low molecular weight polycarboxylic acid polymer (i.e. having a molecular weight of less than or equal to 200,000 Da) | | | | | |

The fineness of grind, opacity, NVC% (i.e. solids%), viscosity, stability at 48 hours, tape adhesion to untreated oriented polypropylene (OPP), and OTR of the white inks was assessed. The results are shown in Table 1B.

**Table 1B. Assessment of white oxygen barrier inks**

| **Material** | **Comp. Ex. A** | **Ex. 1 (Ref.)** | **Ex. 2 (Inv.)** | **Ex. 3 (Ref.)** | **Ex. 4 (Inv.)** |
|---|---|---|---|---|---|
| Fineness of Grind (µm) | <10 | <10 | <10 | <10 | <10 |
| Opacity (%) | 60 | 42.7 | 43.1 | 47.7 | 32.7 |
| Solids % | 58.4 | 28.5 | 28.7 | 31.4 | 30.1 |
| Viscosity: mPa.s | 150 | 157 | 155 | 128 | 131 |
| Stability (48 hr.) | OK | OK | ⁵Slt. Phasing | OK | Phasing |
| ⁷Tape adhesion to untreated OPP | Pass | Fail | Pass | Fail | Pass |
| OTR at 23°C, 50% RH (cm³/m²/24h) | 1995 | 18.1 | 4.2 | 12.7 | 6.3 |

| | | | | | |
|---|---|---|---|---|---|
| ⁵Slight phase separation was observed but was easily eliminated with a brief mix; thus stability is considered a pass. ⁷Adhesion was assessed using Tesa 1116 tape according to ASTM D3359. A passing result would be ≤10% ink removal by the tape. | | | | | |

Tests show the use of a more acidic dispersion of surface treated silica to be more compatible with the PVOH than an alkaline colloidal silica, providing better adhesion to OPP film and low OTR values.

The data in Table 1B show that the acidic colloidal silica dispersion (Inv. Examples 2 and 4) provides better adhesion to untreated OPP film than alkaline colloidal silica dispersion (Ref. Examples 1 and 3). However Ref. Examples 1 and 3 exhibit good OTR performance and would have acceptable adhesion to other substrates (especially treated substrates) and could also be used in conjunction with a primer or an adhesion promoter. Thus, the acidic colloidal silica dispersion is preferred, but the alkaline colloidal silica dispersion would also be suitable for certain applications.

### Examples 5 and 6. Oxygen barrier inks.

For inventive Examples 5 and 6, titanium dioxide pigment was dispersed directly into the PVOH/colloidal silica blend. This results in a higher solids system, and more opaque film when printed, with OTR values that are similar to those achieved with Inventive Examples 2 and 4 above. The control/comparative examples are a pure PVOH clear coating with no titanium dioxide (Comparative Example B); and WBDEV529, a standard water-based opaque white commercially available as LAM-W-GN2:AQUALAM GEN2 WHITE (Sun Chemical) containing approximately 30% TiO₂ pigment. WBDEV529 consists of a pigment concentrate with approximately 60% TiO₂ in an aqueous styrene acrylic resin solution blended with a technical varnish containing further acrylics and additives to produce a finished ink with a pigment concentration of about 35%. The use of a pigmented base leads to a much lower level of pigment, so dry pigment was added directly to the resin solution, thereby boosting the level of pigment in the finished ink and lifting the solids content. The formulations of Examples 5 and 6 and the comparative Examples are shown in Table 2A.

**Table 2A. Formulation of Examples 5 and 6, and comparative examples**

| **Material** | **Description** | **Comp. Ex. B⁵** | **Ex. 5 (Inv.)** | **Ex. 6 (Inv.)** | **WBDEV 529³ (Comp.)** |
|---|---|---|---|---|---|
| ¹PVOH | 25% solution | 90 | 50 | 50 | |
| ²Colloidal Silica Dispersion | 40% NV | | 29.4 | 24.5 | Water-based flexo opaque white |
| TiO₂ Pigment | TiO₂ Pigment | | 20 | 25 | |
| Deionized Water | Solvent | 10 | | | |
| ⁴Wetting/Dispersing additive | Dispersant | | 0.5 | 0.4 | |
| Silicone defoamer | Defoamer | | 0.1 | 0.1 | |
| Total | | 100 | 100 | 100 | |

| | | | | | |
|---|---|---|---|---|---|
| ¹20-25% solution of an amorphous water soluble, biodegradable, vinyl alcohol copolymer with low crystallinity and high hydrogen bond strength and excellent gas barrier properties ²Acidic, 30% aqueous dispersion of surface treated silica ⁴Solution of an alkylolammonium salt of a lower molecular weight polycarboxylic acid polymer ³WBDEV529 is commercially available as LAM-W-GN2:AQUALAM GEN2 WHITE (Sun Chemical) ⁵Clear coating without TiO₂ | | | | | |

By adding the dry pigment to the coating, an improvement can be seen over the previous examples in that the non-volatile content is higher, allowing higher coating weights to be applied, and therefore improved drying and barrier properties. These coatings were applied with a laboratory flexo proofer to corona-treated MDOPE with a 6.8BCM anilox in one and two layers. The properties of the inks of Table 2A are shown in Table 2B.

**Table 2B. Assessment of oxygen barrier inks**

| **Material** | | **Comp. Ex. B** | **Ex. 5 (Inv.)** | **Ex. 6 (Inv.)** | **WBDEV 529³ (Comp.)** |
|---|---|---|---|---|---|
| Opacity (%) | | 8.8 | 51.6 | 52.2 | 60 |
| OTR (23°C, 50% RH) cm³/m²/24h | 1 layer | 13.4 | 19.6 | 36.8 | 1995 |
| | 2 layers | Not tested | 3.9 | 17.2 | Not tested |
| Solids % | | 22.5 | 41.5 | 45 | 58.4 |
| Adhesion (Tape test) | | Pass | Pass | Pass | Pass |
| Viscosity (mPa.s) | | 300 | 315 | 347 | 150 |
| Grind (µm) | | n/a | <10 | <10 | <20 |

Comparative Ex. B is a clear coating with low opacity. Only one layer of Comparative Ex. B was tested as this is how a clear oxygen barrier coating would typically be applied. Two layers are preferred for the white to boost the opacity, although the results above show that OTR of the single layer is still very good and could be used with a single hit if the opacity is sufficient for a particular application. Table 2 shows that increasing the TiO₂ from 20% (Inventive Ex. 5) to 25% (Inventive Ex. 6) will lessen the gas barrier properties, however the gas barrier properties for Inventive Ex. 6 would still be suitable for some applications.

The relatively high viscosity of Inventive Examples 5 and 6 is a result of an increase in the PVOH resin concentration compared with the previous examples and the increased solids content of the final formulation, and helps to keep the pigment in suspension. This can be reduced with water or a blend of water and alcohol to bring the formulation to print viscosity. The OTR and tape adhesion results in Table 2B are for prints produced after reduction with water and ethanol. A single layer of any of the inventive examples applied with a 6.8BCM anilox will provide the final structure with a significant degree of barrier to oxygen, but the opacity of the coating will not match that of a standard opaque white such as WBDEV529. For better opacity, 2 layers of coating are preferred. This also provides improved barrier performance, with an OTR of 3.9 cm³/m²/24h compared with 19.6 cm³/m²/24h for the single layer of white. In a further embodiment, a thin layer of conventional white may be applied underneath a single layer of inventive barrier white to achieve the desired opacity and good barrier on a flexographic or gravure press even with low volume aniloxes.

Higher barrier and opacity may also be achieved in a single layer if a higher volume anilox can be used. This depends on the drying capacity of the press and the desired print speed. Gravure printing stations are generally capable of applying heavier coat weights than flexographic presses and may be a preferred to apply only a single layer of the barrier white ink.

### Examples 7 and 7A. Oxygen barrier inks.

In Inventive Example 7, an anionic dispersion of a polyurethane polyol resin is used in a barrier white formulation designed for use in a PE//PE mono-material laminate. Comparative Example 7A is HDUA-11811 Duralam TF HO White, which is a commercially available standard solvent-based white (Sun Chemical). The formulations of Examples 7 and 7A are shown in Table 3A.

**Table 3A. Formulations of Examples 7 and 7A**

| **Material** | **Description** | **Ex. 7 (Inv.)** | **⁷Ex. 7A (Comp.)** |
|---|---|---|---|
| ¹PVOH | 25% solution | 49 | HDUA-11811 |
| ²Colloidal Silica Dispersion | 40% NV | 29.1 | Duralam TF |
| Silicone Defoamer | Defoamer | 0.2 | HO White |
| ⁶Wetting/Dispersing additive | Dispersant | 0.4 | |
| Biocide | | 0.1 | |
| TiO₂ pigment | | 20 | |
| ⁴Rheology modifier | | 0.7 | |
| ³Adhesion promoter | | 0.5 | |
| Total | | 100 | |

| | | | |
|---|---|---|---|
| ¹20-25% solution of an amorphous water soluble, biodegradable, vinyl alcohol copolymer with low crystallinity and high hydrogen bond strength and excellent gas barrier properties ²Acidic, 30% aqueous dispersion of surface treated silica ³Anionic dispersion of a polyurethane polyol resin ⁴Aqueous polyether polyurethane associative thickener (NISAT) ⁶Solution of an alkylolammonium salt of a lower molecular weight polycarboxylic acid polymer ⁷HDUA-11811 Duralam TF HO White. Commercially available comparative standard solvent-based white (Sun Chemical) | | | |

Examples 7 and 7A inks were assessed as described above. That data are shown in Table 3B.

**Table 3B. Assessment of Examples 7 and 7A**

| **Material** | **Description** | **Ex. 7 (Inv.)** | **⁷Ex. 7A (Comp.)** |
|---|---|---|---|
| Solids % | | 54.2 | 40.9 |
| Adhesion (Tape test) | | Pass | Pass |
| Viscosity (mPa.s) | | 320 | 63 |
| Grind (µm) | | <10 | <10 |
| Opacity (%) | 2 layers | 52 | 43 |
| OTR (23°C, 50% RH) cc/m²/day | 2 layers | 2.4 | 2754 |

When printed onto PE, Inventive Example 7 has been shown to give excellent OTR of <5 cm³/m²/24h, wherein an OTR at 23°C and 50% RH of 2.4 cm³/m²/24h was achieved. In contrast, the Comparative Example 7A white exhibits poor OTR (2754 cm³/m²/24h). When laminated to a further PE film using solvent-based (such as SunLam LX-544/KW-75 from Sun Chemical) or solvent-free (such as SunLam NS-2033/HA-376 also from Sun Chemical) lamination adhesives, lamination bond strengths* of 5-6N/15mm are possible. In one embodiment, the lamination adhesive may be a barrier adhesive to impart additional barrier performance. Barrier adhesives that may be suitable include, for instance, Paslim SF (solvent-free) or Paslim VM (solvent-based) both commercially available from Sun Chemical/DIC group. Lamination bond strengths were measured using a Lloyd LRX tensile tester according to ASTM F904.
*Lamination bond strength ≥ 1.0N/15mm preferred; more preferred is ≥ 2.0N/15mm; more preferred is ≥ 3.0N/15mm; more preferred is ≥ 4.0N/15mm; most preferred is ≥ 5.0N/15mm.

### Example 8. Two pack oxygen barrier.

In a further example, an adhesion promoter (in this case a dispersion of zirconium propionate) is added as a second component to make a 2-pack composition. The 2-pack system is better suited to polypropylene laminates; adhesion to polypropylene films is more challenging, so incorporation of an adhesion promoter was found to be advantageous. In the 2-pack embodiment, the Part A and Part B adhesion promoter would be supplied separately, with the Part B added press-side immediately prior to use as it tends to settle out during storage. The formulation of Example 8 is shown in Table 4A.

**Table 4A. Formulation of Example 8 - A blend of Part A (100 pts) to Part B (33 parts)**

| | Ingredient | Description | Ex. 8 (Inv.) |
|---|---|---|---|
| Part A | ¹PVOH | 25% solution | 49.1 |
| | ²Colloidal Silica Dispersion | 30% NV | 29.0 |
| | Silicone Defoamer | Defoamer | 0.2 |
| | ³Wetting/Dispersing additive | Dispersant | 0.4 |
| | Biocide | | 0.1 |
| | TiO₂ pigment | | 20.0 |
| | Mono Ethylene Glycol | Plasticizer | 0.5 |
| | Rheology modifier | | 0.7 |
| | | Total | 100 |
| | | | |
| Part B | Ethanol | Solvent | 6.5 |
| | Zirconium Propionate | Adhesion promoter | 2.0 |
| | Water | Diluent | 24.5 |
| | | Total | 33 |

| | | | |
|---|---|---|---|
| ¹20-25% solution of an amorphous water soluble, biodegradable, vinyl alcohol copolymer with low crystallinity and high hydrogen bond strength and excellent gas barrier properties ²Acidic, 40% aqueous dispersion of surface treated silica ³Solution of an alkylolammonium salt of a lower molecular weight polycarboxylic acid polymer | | | |

The data for the assessment of Example 8 are shown in Table 4B.

**Table 4B. Assessment of Example 8**

| | | |
|---|---|---|
| Solids % | | 45.6 |
| Adhesion (Tape test) | | Pass |
| Viscosity (mPa.s) | | 270 |
| Grind (µm) | | <10 |
| Opacity (%) (2 layers) | | 51.3 |
| OTR (cm³/m²/24h) | 2 layers | 0.8 |

Inventive Example 8 gave an OTR of 0.8 cm³/m²/24h at 23°C, 50% RH on MB400 OPP when applied at a coating weight of 6.0 g/m². Lamination bond strengths in an OPP//CPP laminate are about 2.0N/15mm.

### Examples 9 and 10. Yellow and red pigmented oxygen barrier inks.

Examples 9 and 10 are oxygen barrier inks, wherein the TiO₂ white pigment is replaced with a yellow pigment and a red pigment, respectively. The formulation of Examples 9 and 10 is shown in Table 5A below.

**Table 5A. Formulation of Examples 9 and 10**

| **Ingredient** | **Ex. 9 (Inv. Yellow)** | **Ex. 10 (Inv. Red)** |
|---|---|---|
| PVOH (25%) | 50 | 50 |
| Colloidal silica dispersion | 29.4 | 29.4 |
| Disperbyk 190 | 0.5 | 0.5 |
| Sun Chemical PY2220 Yellow Iron oxide | 20 | |
| Sun Chemical R2135 Red Iron Oxide | | 20 |
| Tego Foamex 1488 | 0.1 | 0.1 |
| Total | 100 | 100 |

The properties of Examples 9 and 10 were measured. The data are shown in Table 5B.

**Table 5B. Assessment of Examples 9 and 10**

| | **Ex. 9 (Inv. Yellow)** | **Ex. 10 (Inv. Red)** |
|---|---|---|
| Opacity (%) (2 layers) | 52.4 | 88.1 |
| OTR (23°C, 50% RH) cm³/m²/24hr (2 layers) | 9.1 | 3.3 |
| Viscosity (mPa.s @ 500 s-1) (reduced) | 67 | 54 |
| Solids content (%) (reduced) | 28.4 | 30.5 |
| pH | 4.3 | 4.2 |
| Adhesion (Tape test) | Pass | Pass |
| Grind (µm) | <10 | <10 |

The data in Table 5B shows that the present invention encompasses inks with colorants that also show excellent OTR and adhesion properties.

## Claims

1. An opaque water-based printing ink or coating composition comprising:
(a) 5 wt% to 20 wt% solid polyvinyl alcohol, based on the total weight of the composition;
(b) 10 wt% to 50 wt% colloidal silica dispersion, wherein the colloidal silica dispersion is acidic, with a pH range of 3 to 6;
(c) 5 wt% to 25 wt% ethanol; and
(d) 5 wt% to 35 wt% deionized water.

2. The composition of claim 1, further comprising 10 wt% to 50wt% titanium dioxide, based on the total weight of the composition, optionally comprising 15 wt% to 45 wt% titanium dioxide, based on the total weight of the composition.

3. The composition of any preceding claim, wherein the titanium dioxide is dispersed directly into the polyvinyl alcohol / colloidal silica blend.

4. The composition of any preceding claim, further comprising one or more colorants and/or one or more adhesion promoters.

5. The composition of claim 4, wherein:
i) the adhesion promoter is an anionic dispersion of a polyurethane polyol resin; or
ii) the adhesion promoter is selected from the group consisting of zirconium propionate, zinc oxide, zirconium oxides, and combinations thereof.

6. The composition of any preceding claim, wherein the composition is equal to or greater than 90% biodegradable.

7. The composition of any preceding claim, wherein the composition provides an oxygen transmission rate of less than 100 cm³/m²/24h at 23°C and 50% relative humidity;
optionally wherein the composition provides an oxygen transmission rate of less than or equal to 50 cm³/m²/24h at 23°C and 50% relative humidity; optionally wherein the composition provides an oxygen transmission rate of less than or equal to 25 cm³/m²/24h at 23°C and 50% relative humidity, optionally wherein the composition provides an oxygen transmission rate of less than or equal to 15 cm³/m²/24h at 23°C and 50% relative humidity.

8. A method of providing a printed structure having an oxygen barrier layer, comprising:
(a) applying one or more layers of the composition of any preceding claim on a substrate as one or more oxygen barrier layers;
(b) drying the one or more layers on the substrate; and
(c) optionally applying and drying one or more additional ink layers;
thereby obtaining a printed structure having an oxygen barrier layer;
wherein the printed structure having an oxygen barrier layer has an oxygen transmission rate of less than 100 cm³/m²/24h at 23°C and 50% relative humidity.

9. The method of claim 8, wherein the one or more additional ink layers comprise washable inks.

10. The method of any one of claims 8 or 9, wherein a primer is used as a first down layer on the substrate.

11. The method of any one of claims 8 to 10, wherein the composition used in step (a) is used as a backing white, optionally wherein the backing white replaces the primer.

12. A method of providing a laminate structure, comprising:
(a) applying an adhesive on the printed structure having an oxygen barrier layer prepared by the method of any one of claims 8 to 11;
(b) contacting the adhesive with a second substrate;
(c) adhering the printed structure having an oxygen barrier layer and the second substrate, obtaining a laminate structure;
wherein the laminate structure has an oxygen transmission rate of less than 100 cm³/m²/24h at 23°C and 50% relative humidity; and
wherein the laminate structure has a lamination bond strength of equal to or greater than 1.5 N/15mm.

13. The laminate structure of claim 12, wherein the lamination bond strength is equal to or greater than 2.0 N/15mm.

14. A printed structure, prepared by the method of any one claims 8 to 11; or a laminate structure prepared by the method of any one of claims 12 to 13.

15. The printed structure or laminate structure of claim 14, wherein the structure is a packaging structure.

## Patentansprüche

1. Opake wasserbasierte Drucktinte oder Beschichtungszusammensetzung, umfassend:
(a) 5 Gew.-% bis 20 Gew.-% festen Polyvinylalkohol, bezogen auf das Gesamtgewicht der Zusammensetzung;
(b) 10 Gew.-% bis 50 Gew.-% kolloidale Siliciumdioxiddispersion, wobei die kolloidale Siliciumdioxiddispersion sauer ist, mit einem pH-Bereich von 3 bis 6;
(c) 5 Gew.-% bis 25 Gew.-% Ethanol; und
(d) 5 Gew.-% bis 35 Gew.-% entionisiertes Wasser.

2. Zusammensetzung nach Anspruch 1, ferner umfassend 10 Gew.-% bis 50 Gew.-% Titandioxid, bezogen auf das Gesamtgewicht der Zusammensetzung, gegebenenfalls umfassend 15 Gew.-% bis 45 Gew.-% Titandioxid, bezogen auf das Gesamtgewicht der Zusammensetzung.

3. Zusammensetzung nach einem der vorhergehenden Ansprüche, wobei das Titandioxid direkt in das Polyvinylalkohol-kolloidale Siliciumdioxid-Gemisch hinein dispergiert worden ist.

4. Zusammensetzung nach einem der vorhergehenden Ansprüche, ferner umfassend ein oder mehrere Farbmittel und/oder einen oder mehrere Haftvermittler.

5. Zusammensetzung nach Anspruch 4, wobei:
i) der Haftvermittler eine anionische Dispersion eines Polyurethanpolyolharzes ist; oder
ii) der Haftvermittler ausgewählt ist aus der Gruppe bestehend aus Zirkoniumpropionat, Zinkoxid, Zirkoniumoxiden und Kombinationen davon.

6. Zusammensetzung nach einem der vorhergehenden Ansprüche, wobei die Zusammensetzung gleich oder größer als 90 % biologisch abbaubar ist.

7. Zusammensetzung nach einem der vorhergehenden Ansprüche, wobei die Zusammensetzung eine Sauerstoffdurchlässigkeitsrate von weniger als 100 cm³/m²/24 h bei 23 °C und 50 % relativer Luftfeuchtigkeit bereitstellt;
wobei gegebenenfalls die Zusammensetzung eine Sauerstoffdurchlässigkeitsrate von weniger als oder gleich 50 cm³/m²/24 h bei 23 °C und 50 % relativer Luftfeuchtigkeit bereitstellt; wobei gegebenenfalls die Zusammensetzung eine Sauerstoffdurchlässigkeitsrate von weniger als oder gleich 25 cm³/m²/24 h bei 23 °C und 50 % relativer Feuchtigkeit bereitstellt, wobei gegebenenfalls die Zusammensetzung eine Sauerstoffdurchlässigkeitsrate von weniger als oder gleich 15 cm³/m²/24 h bei 23 °C und 50 % relativer Feuchtigkeit bereitstellt.

8. Verfahren zum Bereitstellen einer gedruckten Struktur mit einer Sauerstoffbarriereschicht, umfassend:
(a) Aufbringen einer oder mehrerer Schichten der Zusammensetzung nach einem der vorhergehenden Ansprüche auf ein Substrat als eine oder mehrere Sauerstoffbarriereschichten;
(b) Trocknen der einen oder der mehreren Schichten auf dem Substrat; und
(c) gegebenenfalls Aufbringen und Trocknen einer oder mehrerer zusätzlicher Tintenschichten;
wodurch eine gedruckte Struktur mit einer Sauerstoffbarriereschicht erhalten wird;
wobei die gedruckte Struktur mit einer Sauerstoffbarriereschicht eine Sauerstoffdurchlässigkeitsrate von weniger als 100 cm³/m²/24 h bei 23 °C und 50 % relativer Feuchtigkeit aufweist.

9. Verfahren nach Anspruch 8, wobei die eine oder mehreren zusätzlichen Tintenschichten waschbare Tinten umfassen.

10. Verfahren nach einem der Ansprüche 8 oder 9, wobei ein Primer als eine erste untere Schicht auf dem Substrat verwendet wird.

11. Verfahren nach einem der Ansprüche 8 bis 10, wobei die in Schritt (a) verwendete Zusammensetzung als ein Trägerweiß verwendet wird, wobei gegebenenfalls das Trägerweiß den Primer ersetzt.

12. Verfahren zum Bereitstellen einer Laminatstruktur, umfassend:
(a) Aufbringen eines Klebstoffs auf die gedruckte Struktur mit einer Sauerstoffbarriereschicht, die durch das Verfahren nach einem der Ansprüche 8 bis 11 hergestellt ist;
(b) Kontaktieren des Klebstoffs mit einem zweiten Substrat;
(c) Kleben der gedruckten Struktur mit einer Sauerstoffbarriereschicht auf das zweite Substrat, wodurch eine Laminatstruktur erhalten wird;
wobei die Laminatstruktur eine Sauerstoffdurchlässigkeitsrate von weniger als 100 cm³/m²/24 h bei 23 °C und 50 % relativer Feuchtigkeit aufweist; und
wobei die Laminatstruktur eine Laminierungsbindungsfestigkeit gleich oder größer als 1,5 N/15 mm aufweist.

13. Laminatstruktur nach Anspruch 12, wobei die Laminierungsbindungsfestigkeit gleich oder größer als 2,0 N/15 mm ist.

14. Gedruckte Struktur, die durch das Verfahren nach einem der Ansprüche 8 bis 11 hergestellt ist; oder eine Laminatstruktur, die durch das Verfahren nach einem der Ansprüche 12 bis 13 hergestellt ist.

15. Gedruckte Struktur oder Laminatstruktur nach Anspruch 14, wobei die Struktur eine Verpackungsstruktur ist.

## Revendications

1. Composition d'encre d'impression ou de revêtement à base d'eau opaque comprenant :
(a) 5 % en poids à 20 % en poids d'alcool polyvinylique solide, rapporté au poids total de la composition ;
(b) 10 % en poids à 50 % en poids de dispersion de silice colloïdale, la dispersion de silice colloïdale étant acide, avec une fourchette de pH de 3 à 6 ;
(c) 5 % en poids à 25 % en poids d'éthanol ; et
(d) 5 % en poids à 35 % en poids d'eau désionisée.

2. Composition de la revendication 1, comprenant en outre 10 % en poids à 50 % en poids de dioxyde de titane, rapporté au poids total de la composition, comprenant éventuellement 15 % en poids à 45 % en poids de dioxyde de titane, rapporté au poids total de la composition.

3. Composition d'une quelconque revendication précédente, dans laquelle le dioxyde de titane est directement dispersé dans le mélange alcool polyvinylique/silice colloïdale.

4. Composition d'une quelconque revendication précédente, comprenant en outre un ou plusieurs colorants et/ou un ou plusieurs promoteurs d'adhérence.

5. Composition de la revendication 4, dans laquelle :
i) le promoteur d'adhérence est une dispersion anionique d'une résine de polyuréthane-polyol ; ou
ii) le promoteur d'adhérence est choisi dans le groupe constitué par le propionate de zirconium, l'oxyde de zinc, les oxydes de zirconium, et les combinaisons de ceux-ci.

6. Composition d'une quelconque revendication précédente, la composition étant biodégradable à hauteur de 90 % ou plus.

7. Composition d'une quelconque revendication précédente, la composition assurant un taux de transmission d'oxygène inférieur à 100 cm³/m²/24 h à 23 °C et 50 % d'humidité relative ;
la composition assurant éventuellement un taux de transmission d'oxygène inférieur ou égal à 50 cm³/m²/24 h à 23 °C et 50 % d'humidité relative ; la composition assurant éventuellement un taux de transmission d'oxygène inférieur ou égal à 25 cm³/m²/24 h à 23 °C et 50 % d'humidité relative, la composition assurant éventuellement un taux de transmission d'oxygène inférieur ou égal à 15 cm³/m²/24 h à 23 °C et 50 % d'humidité relative.

8. Procédé d'obtention d'une structure imprimée comportant une couche barrière à l'oxygène, comprenant :
(a) l'application sur un substrat d'une ou plusieurs couches de la composition d'une quelconque revendication précédente jouant le rôle d'une ou plusieurs couches barrières à l'oxygène ;
(b) le séchage de la ou des couches sur le substrat ; et
(c) éventuellement, l'application et le séchage d'une ou plusieurs couches d'encre supplémentaires ;
ce qui permet d'obtenir une structure imprimée comportant une couche barrière à l'oxygène ;
la structure imprimée comportant une couche barrière à l'oxygène présentant un taux de transmission d'oxygène inférieur à 100 cm³/m²/24 h à 23 °C et 50 % d'humidité relative.

9. Procédé de la revendication 8, dans lequel la ou les couches d'encre supplémentaires comprennent des encres lavables.

10. Procédé de l'une quelconque des revendications 8 et 9, dans lequel un apprêt est utilisé comme première couche appliquée sur le substrat.

11. Procédé de l'une quelconque des revendications 8 à 10, dans lequel la composition utilisée à l'étape (a) est utilisée comme blanc de fond, le blanc de fond remplaçant éventuellement l'apprêt.

12. Procédé d'obtention d'une structure stratifiée, comprenant :
(a) l'application d'un adhésif sur la structure imprimée comportant une couche barrière à l'oxygène préparée par le procédé de l'une quelconque des revendications 8 à 11 ;
(b) la mise en contact de l'adhésif avec un deuxième substrat ;
(c) l'adhérence de la structure imprimée comportant une couche barrière à l'oxygène au deuxième substrat, ce qui permet d'obtenir d'une structure stratifiée ;
la structure stratifiée présentant un taux de transmission d'oxygène inférieur à 100 cm³/m²/24 h à 23 °C et 50 % d'humidité relative ; et
la structure stratifiée présentant une résistance d'adhérence par stratification égale ou supérieure à 1,5 N/15 mm.

13. Structure stratifiée de la revendication 12, dans laquelle la résistance d'adhérence par stratification est égale ou supérieure à 2,0 N/15 mm.

14. Structure imprimée préparée par le procédé de l'une quelconque des revendications 8 à 11 ; ou structure stratifiée préparée par le procédé de l'une quelconque des revendications 12 à 13.

15. Structure imprimée ou structure stratifiée de la revendication 14, la structure étant une structure d'emballage.
